# EUROPÄISCHE PATENTSCHRIFT

(11) **EP 3 371 033 B1**
(45) Veröffentlichungstag und Bekanntmachung des Hinweises auf die Patenterteilung: **11.09.2019**
(21) Anmeldenummer: 16788709.0
(22) Anmeldetag: 02.11.2016
(51) Int. Cl.: B62D 1/189

(54) **SCHWENKLAGER FÜR HÖHENVERSTELLBARE LENKSÄULE**
PIVOT BEARINGS FOR A HEIGHT-ADJUSTABLE STEERING COLUMN
PALIER PIVOTANT POUR COLONNE DE DIRECTION RÉGLABLE EN HAUTEUR

(30) Priorität: 05.11.2015 DE 102015119047
(43) Veröffentlichungstag der Anmeldung: 12.09.2018
(73) Patentinhaber: ThyssenKrupp Presta AG, 9492 Eschen (LI); thyssenkrupp AG, 45143 Essen (DE)
(72) Erfinder: GEIGER, Adrian, 9436 Balgach (CH); GEISELBERGER, Thomas, 9008 St. Gallen (CH)
(74) Vertreter: thyssenkrupp Intellectual Property GmbH
(86) Internationale Anmeldenummer: PCT/EP2016/076342
(87) Internationale Veröffentlichungsnummer: WO 2017/076858

(56) Entgegenhaltungen:
- EP-A1- 1 847 440
- DE-A1-102008 062 634
- DE-A1-102012 100 701

## Beschreibung

Die Erfindung betrifft eine höhenverstellbare Lenksäule für ein Kraftfahrzeug, umfassend eine Stelleinheit, in der eine Lenkspindel drehbar gelagert ist, wobei die Stelleinheit an einer mit dem Fahrzeugchassis fest verbindbaren Halteeinheit mittels zweier auf einer Schwenkachse in horizontalem Abstand zueinander angeordneter Schwenklager schwenkbar gelagert ist, wobei die Schwenklager jeweils aus einem axial vorstehenden Zweiflachvorsprung und einer mit dem Zweiflachvorsprung in Eingriff stehenden Ausnehmung bestehen, die jeweils einen Einführbereich zum Einführen des Zweiflachvorsprungs in radialer Richtung zur Schwenkachse aufweisen, wobei der Einführbereich eine Innenweite aufweist, die angepasst an eine Breite des Zweiflachvorsprungs ausgebildet ist und wobei der Einführbereich in jeweils einen teilkreisförmigen Lagerbereich übergeht, dessen Innendurchmesser an den Außendurchmesser des Zweiflachvorsprungs angepasst ist, sodass dieser nach einer Drehung um die Schwenkachse um mindestens 5° im Lagerbereich schwenkbar gelagert ist.

Eine derartige Lenksäule ist aus der DE 195 31 278 C1 bekannt. Diese offenbart eine Schwenkachsenanordnung, wobei die Zentrierung zwischen Halteeinheit und Stelleinheit mittels einer Hülse realisiert wird. Nachteil dieser Lösung ist der hohe Montageaufwand und komplizierter Aufbau. Ein Schwenklager der eingangs genannten Art ist für eine höhenverstellbare Lenksäule in der den Oberbegriff des unabhängigen Anspruchs offenbarenden DE 10 2008 062 634 A1 beschrieben. Nachteilig daran ist jedoch der aufwendige und kostspielige Aufbau. Aufgabe der Erfindung ist es, eine verbesserte Schwenkachsenanordnung einer Lenksäule bereitzustellen, die einen einfachen und kostengünstigen Aufbau aufweist.

Gelöst wird diese Aufgabe bei einer höhenverstellbaren Lenksäule für Kraftfahrzeuge der eingangs genannten Art umfassend eine Stelleinheit, in der eine Lenkspindel drehbar gelagert ist, wobei die Stelleinheit an einer mit dem Fahrzeugchassis fest verbindbaren Halteeinheit mittels zweier auf einer Schwenkachse im horizontalem Abstand zueinander angeordneter Schwenklager schwenkbar gelagert ist, wobei die Schwenklager jeweils aus einem axial vorstehenden Zweiflachvorsprung und einer mit dem Zweiflachvorsprung in Eingriff stehenden Ausnehmung bestehen, die jeweils einen Einführbereich zum Einführen des Zweiflachvorsprungs in radialer Richtung zur Schwenkachse aufweist, wobei der Einführbereich eine Innenweite aufweist, die angepasst zu einer Breite des Zweiflachvorsprungs ausgebildet ist und wobei der Einführbereich in jeweils einen teilkreisförmigen Lagerbereich übergeht, dessen Innendurchmesser angepasst zu dem Außendurchmesser des Zweiflachvorsprungs ist, sodass dieser nach einer Drehung um die Schwenkachse um mindestens 5° im Lagerbereich schwenkbar gelagert ist, dadurch, dass der Zweiflachvorsprung und/oder die Ausnehmung mittels Umformen in der Stelleinheit und/oder der Halteeinheit ausgebildet sind.

Die erfindungsgemäß besonders einfach zu fertigende Ausführungsform sieht vor, dass der Zweiflachvorsprung und/oder die Ausnehmung mittels Umformen der Stelleinheit und/oder der Halteeinheit ausgebildet sind. Die Halteeinheit kann bevorzugt aus einem ebenen Blech mittels einer Blech-Schneid-Umformtechnologie dargestellt werden. Bevorzugt kann die Ausnehmung durch Feinstanzen als durchgehende Öffnung ausgebildet werden. Ebenfalls ist es denkbar und möglich, die Ausnehmung durch Fräsen auszubilden. Dies wird besonders bei der Darstellung des Halteteils mittels einer Aluminium- oder Magnesium-Gusstechnologie bevorzugt.

Unter dem Begriff "angepasst" ist zu verstehen, dass das Einführen des Zweiflachvorsprungs in den Einführbereich und die Lagerung im Lagerbereich jeweils gut ermöglicht ist. Entsprechend sind die Innenweite des Einführbereichs und die Breite des Zweiflachvorsprungs zueinander mit einer Spielpassung oder Übergangspassung ausgebildet. Ebenfalls sind der Außendurchmesser des Zweiflachvorsprungs und der Innendurchmesser des Lagerbereichs der Ausnehmung zueinander mit einer Spielpassung oder Übergangspassung ausgebildet.

Die erfindungsgemäße Lösung hat den Vorteil, dass sie ohne Montage zusätzlicher Teile, wie beispielsweise Hülsen, ein einfaches Zusammenfügen von Stelleinheit und Halteeinheit ohne Werkzeug ermöglicht und gleichzeitig eine sichere Lagerung gewährleistet.

Die Ausnehmung kann durch eine Vertiefung, auch als Rücksprung bezeichnet, im Material oder durch eine durchgehende Öffnung im Material bereitgestellt werden.

Unter dem Begriff "Zweiflachvorsprung" ist ein Vorsprung zu verstehen, dessen Querschnittsfläche, die orthogonal zur Erstreckungsrichtung des Vorsprungs angeordnet ist, einen Basiskreis umfasst, der durch zwei parallele Sekanten beschnitten ist und dadurch begrenzt ist. Mit anderen Worten wird der Basiskreis um zwei symmetrisch angeordnete Kreissegmente reduziert. Die Begrenzung des Querschnitts des Zweiflachvorsprungs wird somit von zwei sich gegenüberliegende Kreisbogenabschnitte, die dem Basiskreis und dessen Basiskreisdurchmesser entsprechen bzw. auf diesem basieren, und den Sekanten gebildet. Bevorzugt weisen die Sekanten einen identischen Abstand zum Kreismittelpunkt des Basiskreises auf bzw. sind die Kreissegmente deckungsgleich. Durch den Abstand der Sekanten wird die Breite, auch als Weite bezeichnet, des Zweiflachvorsprungs festgelegt. Der Abstand der Sekanten, d.h. die Breite des Zweiflachvorsprungs, ist bevorzugt zwischen 5% und 30% geringer als der Wert des Basiskreisdurchmessers, besonders bevorzugt ist die Breite um 10% geringer als der Basiskreisdurchmesser.

Um die Montage noch weiter zu vereinfachen, ist der Zweiflachvorsprung nach der Drehung um die Schwenkachse bevorzugt um mindestens 10°, besonders bevorzugt um 45°, im Lagerbereich schwenkbar gelagert.

Die Drehung des Zweiflachvorsprungs um die Schwenkachse muss weniger als 180° betragen. Andernfalls könnte es zur Verlagerung des Zweiflachvorsprungs in den Einführbereich kommen, so dass der Zweiflachvorsprung nicht mehr schwenkbar im Lagerbereich aufgenommen ist.

In einer bevorzugten Weiterbildung ist in der Stelleinheit ein Mantelrohr, aufgenommen, in dem die Lenkspindel, bevorzugt durch Wälzlager, gelagert ist. Das Mantelrohr ist gegenüber der Stelleinheit in Richtung der Drehachse der Lenkspindel verschiebbar. Dadurch kann zusätzlich zur Höhenverstellung eine Längsverstellung bereitgestellt werden.

Die genannten Schwenklagereinheiten werden zusammengefügt, indem sie zunächst einen Winkel zueinander einnehmen, bei dem der Zweiflachvorsprung mit einer Schmalseite voran in den relativ schmalen Einführbereich der Ausnehmung an der jeweils anderen Schwenklagereinheit eingeführt werden kann. Nachdem der Zweiflachvorsprung bis in den teilkreisförmigen Lagerbereich der Ausnehmung eingeführt worden ist, wird die Stelleinheit gegenüber der Halteeinheit um mindestens 5°, bevorzugt 10°, besonders bevorzugt 45°, gedreht, wobei sich der Zweiflachvorsprung innerhalb des Lagerbereichs der Ausnehmung ebenfalls um denselben Winkel verdreht und danach so ausgerichtet ist, dass er nicht mehr in den Einführbereich hinein und aus der Ausnehmung herausbewegen kann. Vielmehr ist der Zweiflachvorsprung innerhalb des Lagerbereichs in allen Richtungen einer auf der Schwenkachse senkrecht stehenden Ebene abgestützt und gegen Verschiebungen gesperrt. Lediglich Drehungen des Zweiflachvorsprungs innerhalb des Lagerbereichs der Ausnehmung sind möglich, sodass die Stelleinheit gegenüber der Halteeinheit innerhalb eines begrenzten Winkelbereichs von einigen Winkelgraden bis zu 50°, bevorzugt 10° schwenkbar ist, um so die vertikale Verstellung des Mantelrohrs der verstellbaren Lenksäule zu ermöglichen. Infolgedessen kann ein auf einem freien Ende der in der Stelleinheit oder im Mantelrohr drehbar gelagerten Lenkspindel sitzendes Lenkrad in vertikaler Richtung verstellt werden.

Der Zweiflachvorsprung kann bei jedem der beiden Lager an der Halteeinheit und die Ausnehmung an den Lagerstellen der Stelleinheit vorgesehen sein oder umgekehrt. In den nachfolgend näher erläuterten Ausführungsbeispielen sind die Zweiflachvorsprünge jeweils auf den gegenüberliegenden Innenseiten der vom Fahrzeugchassis nach unten ragenden Seitenteilen der Halteeinheit vorgesehen, während die Ausnehmungen auf den Außenseiten der Stelleeinheit ausgebildet sind. Die Stelleinheit ist zwischen den Seitenteilen des Halteteils angeordnet, so dass jeweils einer der Außenseiten der Stelleinheit benachbart zu einer der Seitenteile angeordnet ist, so dass diese sich gegenüberliegen. Dabei ist die offene Seite des Einführbereichs der Ausnehmungen in einer Richtung parallel zur Drehachse der Lenkspindel und zu der dem Lenkrad abgewandten Seite hin ausgerichtet.

Wenn der Zweiflachvorsprung in seinem Außenumfangsbereich und/oder die Ausnehmung im Innenumfangsbereich konisch ausgestaltet oder mit einer Fase versehen sind, werden mit Vorteil Fertigungstoleranzen ausgeglichen und es gibt kein Spiel in den Schwenklagern. Weiterhin wird dadurch eine Zentrierung bereitgestellt. Bevorzugt weist die Fase einen Winkel, bezogen auf die Schwenkachse, mit einem Wert zwischen 20° und 60°,besonders bevorzugt zwischen 35° und 55°, auf.

In einer weiteren vorteilhaften Ausführungsform ist vorgesehen, dass ein Schwenkbolzen sich durch die Zweiflachvorsprünge und die Ausnehmungen erstreckt. Dafür ist eine Bohrung vorgesehen, die sich entlang der Schwenkachse durch die Zweiflachvorsprünge und die Ausnehmungen erstreckt. Mit anderen Worten besteht die Bohrung aus mehreren Einzelbohrungen die koaxial zueinander ausgerichtet sind, wobei die Bohrungsachsen mit der Schwenkachse zusammenfällt. Dieser Schwenkbolzen stellt sicher, dass sich die Schwenklager auch bei extremen Krafteinwirkungen auf die Lenksäule, beispielsweise während eines Unfalls, keinesfalls lösen.

Ausführungsbeispiele der Erfindung werden nachfolgend anhand der Zeichnungen näher erläutert.

Die Figuren der Zeichnung zeigen im Einzelnen:
- Figur 1:: eine erfindungsgemäße höhenverstellbare Lenksäule in einer perspektivischen Gesamtansicht von der Seite;
- Figur 2:: eine Halteeinheit und eine mit dem Mantelrohr verbundene Stelleinheit derselben Lenksäule wie in Figur 1;
- Figur 3:: Seitenansicht wie in Figur 2, jedoch von der gegenüberliegenden Seite;
- Figur 4:: ein schematisierter Querschnitt entlang der Schwenkachse durch die erfindungsgemäße Lenksäule wie in Figur 1;
- Figur 5:: eine vergrößerte Teilansicht aus Figur 4 eines Schwenklagers im Schnitt;
- Figur 6:: eine Schwenkeinheit mit abgewinkelter Trägereinheit vor dem Zusammenfügen des Schwenklagers in einer schematisierten Draufsicht;
- Figur 7:: wie Figur 6, jedoch nach dem Einführen des Zweiflachvorsprungs der Halteeinheit in die Ausnehmung der Stelleinheit;
- Figur 8:: wie Figur 7, jedoch nach einer Drehung der Halteeinheit gegenüber der Stelleinheit zur translatorischen Verriegelung des Zweiflachvorsprungs der Halteeinheit in der Ausnehmung der Stelleinheit;
- Figur 9:: eine geschnittene schematisierter Querschnittansicht ähnlich Figur 4 einer zweiten Ausführungsform der Erfindung mit durch die Schwenklager hindurch gehendem Schwenkbolzen;
- Figur 10:: eine schematisierte Darstellung der Halteeinheit mit Schwenkbolzen gemäß der zweiten Ausführungsform der Erfindung;
- Figur 11: eine schematisierte Draufsicht als Prinzipdarstellung des Zweiflachvorsprungs und der Ausnehmung vor dem Zusammenfügen; und
- Figur 12: eine schematisierte Draufsicht als Prinzipdarstellung des Zweiflachvorsprungs und der Ausnehmung nach dem Zusammenfügen und nach einer Drehung des Zweiflachvorsprungs gegenüber der Ausnehmung zur translatorischen Verriegelung.

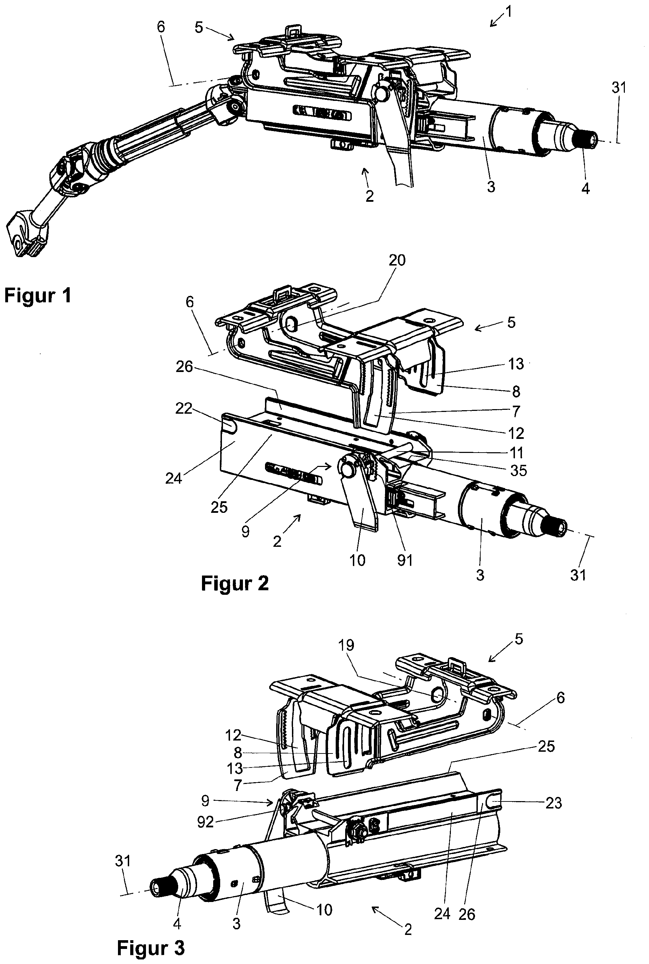

In Figur 1 erkennt man eine höhenverstellbare Lenksäule 1 für ein Kraftfahrzeug, bei der ein Mantelrohr 3 in einer Stelleinheit 2 verschiebbar aufgenommen ist. Ein nicht gezeigtes Lenkrad ist auf dem freien Ende einer in dem Mantelrohr 3 gelagerten Lenkspindel 4 anbringbar. Die Stelleinheit 2 ist von einer Halteeinheit 5 gehalten und um eine Schwenkachse 6 schwenkbar gegenüber der Halteeinheit 5 gelagert. Die Halteeinheit 5 ist mit einem nicht gezeigten Fahrzeugchassis verbindbar.

Des Weiteren ist die Halteeinheit 5 mit zwei Klemmbacken 7, 8 versehen, zwischen denen die Stelleinheit 2 einklemmbar ist. Hierfür dient eine an der Stelleinheit vorgesehene Klemmvorrichtung 9 mit einem Betätigungshebel 10. Ein an der Stelleinheit 2 angeordneter Klemmbolzen 11 durchdringt im montierten Zustand auch zwei Schlitze 12, 13 in den Klemmbacken 7, 8. Bei Betätigung der Klemmvorrichtung 9 mittels des Betätigungshebels 10 in Öffnungsrichtung ist die Stelleinheit 2 mit dem Klemmbolzen 11 innerhalb der Schlitze 12, 13 nach oben und unten verschiebbar, wobei die gesamte Stelleinheit 2 in ihren Schwenklagern 14, 15 um die Schwenkachse 6 geschwenkt wird. Ebenfalls kann es vorgesehen sein, dass das Mantelrohr 3 gegenüber der Stelleinheit 2 in Richtung zur Drehachse 31 der Lenkspindel 4 verschoben werden kann, so dass die Lenksäule 1 ebenfalls in Längsrichtung verstellbar ist. Ist eine gewünschte Höhe der Lenksäule 1 und des Lenkrades erreicht, wird der Betätigungshebel 10 in Schließstellung gebracht, wobei die Klemmvorrichtung 9 die Klemmbacken 7, 8 zusammenpresst und zwischen diesen die Stelleinheit 2 mit dem Mantelrohr 3 der Lenksäule festklemmt. Die Stelleinheit 2 umfasst einen Klemmschlitz 35, der sich in Richtung der Drehachse 31 der Lenkspindel 4 erstreckt, wobei dieser Klemmschlitz in seiner Breite durch die Überführung der Klemmvorrichtung 9 in die Schließstellung vermindert wird. Dadurch wird der Innenquerschnitt der Stelleinheit 2, in dem das Mantelrohr 3 aufgenommen ist, reduziert und somit das Mantelrohr 3 in der Stelleinheit 2 verklemmt. Da die Halteeinheit 5 mit dem nicht gezeigten Fahrzeugchassis fest verbunden werden kann, wird somit auch die Lenksäule 1 gegenüber dem Fahrzeugchassis unverrückbar festgehalten.

Das Mantelrohr 3 kann im Fall eines Fahrzeugunfalls, auch Crash genannt, gegenüber der Stelleinheit 2 in Richtung der Fahrzeugfront unter Energieaufnahme verlagert werden, in dem das Mantelrohr 3 in die Stelleinheit 2 hinein teleskopiert. Dafür kann beispielsweise zwischen dem Mantelrohr 3 und der Stelleinheit 2 ein Biegedraht vorgesehen sein, der durch die Verlagerung des Mantelrohrs 3 gegenüber der Stelleinheit 2 deformiert wird.

In einer nicht dargestellten Ausführungsvariante ist das Mantelrohr nur im Crash gegenüber der Stelleinheit verlagerbar.

Die Klemmvorrichtung 9 umfasst ein erstes Nockenteil 91 und ein mit dem Betätigungshebel 10 verbundenes zweites Nockenteil 92, wobei das zweite Nockenteil 92 mittels des Betätigungshebels 10 gegenüber dem ersten Nockenteil 91 verdrehbar ist, wodurch ein Klemmhub bereitgestellt wird, der die Stelleinheit 2 gegenüber der Halteeinheit 5 festsetzt. Ebenfalls ist es denkbar und möglich, eine alternative Klemmvorrichtung zu verwenden, beispielsweise eine Kippstiftklemmvorrichtung.

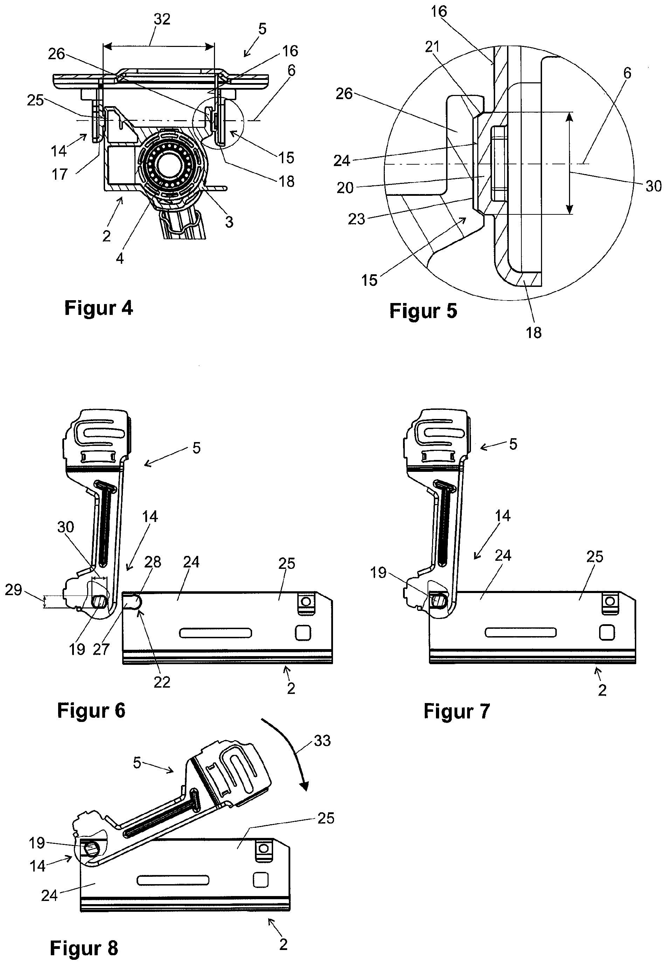

In den Figuren 4 und 5 sind die beiden Schwenklager 14, 15 im Detail dargestellt. An den Innenseiten 16 von nach unten ragenden Seitenteilen 17, 18 der Halteeinheit 5 ist jeweils ein Zweiflachvorsprung 19, 20 in die jeweiligen Seitenteile 17, 18 eingeformt. Im Außenbereich weist der Zweiflachvorsprung 19, 20 eine konische Ausgestaltung 21 auf.

In der Stelleinheit 2 hingegen sind Ausnehmungen 22, 23 auf den Außenseiten 24 von nach oben ragenden Wangen 25, 26 der Stelleinheit 2 durch Umformen ausgebildet. Die Ausnehmungen 22, 23 haben jeweils einen Einführbereich 27 mit einer Innenweite 290 und einen teilkreisförmigen Lagerbereich 28 mit einem Innendurchmesser 300. Die Innenweite 290 des Einführbereichs 27 entspricht der Breite 29 des jeweiligen Zweiflachvorsprungs 19, 20, wobei diese zueinander ein geringes Spiel aufweisen können, um das Fügen zu erleichtern. Der Innendurchmesser 300 des Lagerbereichs 28 entspricht dem Außendurchmesser 30 des Zweiflachvorsprungs 19, 20. Der Außendurchmesser 30 des Zweiflachvorsprungs 19, 20 entspricht dem Durchmesser des Basiskreises 199.

Bevorzugt kann der Einführungsbereich 27 und/oder der Lagerbereiche 28 eine Kunststoffbeschichtung aufweisen.

Auch die inneren Wandabschnitte der Lagerbereich 28 der Ausnehmungen 22, 23 sind mit einer konischen Ausgestaltungen 21 versehen. Wie man am besten in Figur 5 erkennt, liegen die konischen Ausgestaltungen 21 des Zweiflachvorsprung 19, 20 und des Lagerbereichs 28 der Ausnehmung 22, 23 aneinander an, wodurch ein Lagerspiel der Schwenklager 14, 15 minimiert wird und ebenfalls eine Zentrierung erreicht wird. Der Einführbereich 27 der Ausnehmungen 22, 23 ist im Wesentlichen in einer zur Drehachse 31 der Lenkspindel 4 parallelen Richtung derart angeordnet, dass seine Einführöffnung zu der dem (nicht gezeigten) Lenkrad abgewandten Seite hin ausgerichtet ist. Unter "im Wesentlichen parallel" wird eine Winkelabweichung von ±10° verstanden.

Die beiden Schwenklager 14, 15 sind in Richtung der Schwenkachse 6 im horizontalen Abstand 32 zueinander angeordnet (siehe Figur 4).

Wie man am besten in den Figuren 6 bis 8 erkennt, wird die Gelenkverbindung zwischen der Halteeinheit 5 und der Stelleinheit 2 hergestellt, indem die Stelleinheit 2 mit ihrer Längsausdehnung etwa im rechten Winkel zur Längsausdehnung der Halteeinheit 5 ausgerichtet wird. Sodann werden die Zweiflachvorsprünge 19, 20 in die jeweiligen Einführbereiche 27 der beiden Ausnehmungen 22, 23 in Figur 6 von links nach rechts eingeführt, wobei die Breite 29 der Zweiflachvorsprünge 19, 20 durch die Innenweite 290 des Einführbereichs 27 hindurch geschoben wird, bis die in Figur 7 gezeigte Position erreicht ist, wo die Zweiflachvorsprünge 19, 20 jeweils im Lagerbereich 28 der beiden Ausnehmungen 22, 23 positioniert sind. Jetzt wird wie in Figur 8 gezeigt die Halteeinheit 5 in Drehrichtung 33 gegenüber der Stelleinheit 2 verdreht, wobei auch die Zweiflachvorsprünge 19, 20 in den Lagerbereichen 28 der jeweiligen Ausnehmungen 22, 23 gedreht werden. Die Drehung in Drehrichtung 33 beträgt etwa 90°, jedoch können die Zweiflachvorsprünge 19, 20 ab einer Drehung von 5° in Drehrichtung 33 nicht mehr aus den Lagerbereichen 28 der Ausnehmungen 22, 23 entweichen, weil sie derart verdreht sind, dass ihre Außendurchmesser 30 nicht mehr durch die geringere Innenweite 290 der Einführbereiche 27 passen. Damit sind die Schwenklager 14, 15 in dem Sinne verriegelt, dass die Zweiflachvorsprünge 19, 20 nicht mehr aus den Ausnehmungen 22, 23 herausrutschen bzw. sich herausbewegen können, aber dennoch eine Verschwenkbarkeit der Stelleinheit 2 gegenüber der Halteeinheit 5 innerhalb eines begrenzten Schwenkbereichs von einigen Grad bis maximal etwa 20° möglich ist. Beim gewöhnlichen Gebrauch der Lenksäule 1 ist der Schwenkbereich bauartbedingt ohnehin viel kleiner als der maximal mögliche Schwenkwinkel von 10°, bevor sich die Verriegelung der Zweiflachvorsprünge 19, 20 in den Ausnehmungen 22, 23 lösen würden.

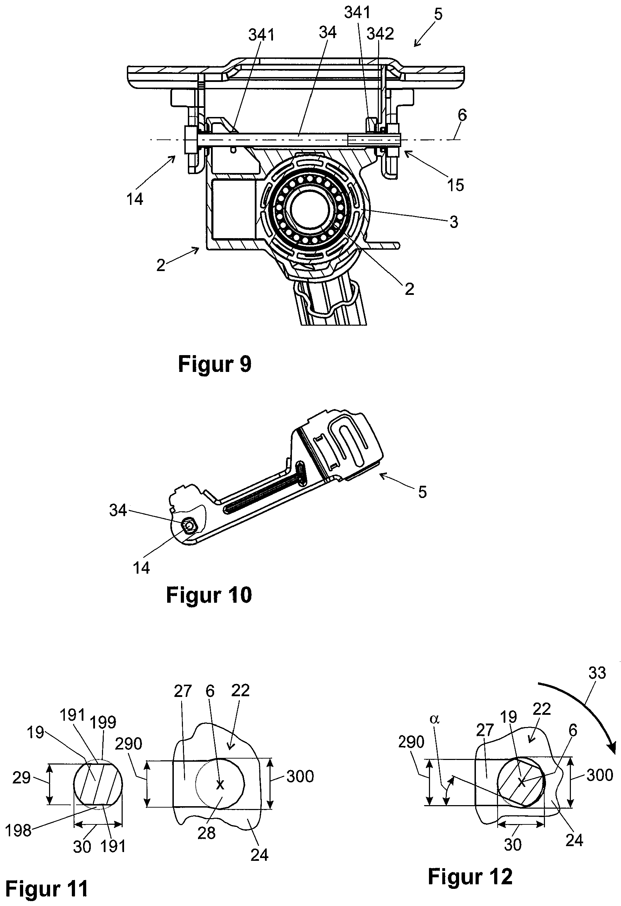

Bei einer in den Figuren 9 und 10 gezeigten zweiten Ausführungsform ist zusätzlich ein Schwenkbolzen 34 vorgesehen, der die beiden Schwenklager 14, 15 und damit sowohl die beiden Zweiflachvorsprünge 19, 20 als auch die beiden Ausnehmungen 22, 23 durchdringt und in jeweiligen Bohrungen 341, 342 aufgenommen ist. Hierdurch wird die Stabilität der Schwenklager 14, 15 weiter erhöht, sodass sie selbst den bei einem Unfall auftretenden hohen Kräften standhalten können.

In der Figur 11 ist eine schematisierte Draufsicht als Prinzipdarstellung des Zweiflachvorsprungs 19 und der Ausnehmung 22 vor dem Zusammenfügen dargestellt. Der Zweiflachvorsprung 19 weist in seinem Querschnitt einen Basiskreis 199 mit dem Außendurchmesser 30 auf, der durch zwei parallele Sekanten191 beschnitten, sprich abgeflacht, ist und dadurch begrenzt ist. Mit anderen Worten wird der Basiskreis um zwei symmetrisch angeordnete Kreissegmente 198 reduziert. Die Sekanten 191 weisen einen identischen Abstand zum Kreismittelpunkt des Basiskreis 199 auf und sind in einer Breite 29 voneinander beabstandet. Der Zweiflachvorsprung 19 weist die zwei Kreisabschnitte 192 auf, die auf dem Basiskreis 199 basieren und den Außendurchmesser 30 aufweisen. Somit bilden die Kreisabschnitte 192 und die Sekanten 191 die Begrenzung des Querschnitts des Zweiflachquerschnitts. Bevorzugt ist der Wert der Breite 29 zwischen 5% und 30% geringer als der Wert des Außendurchmessers 30, besonders bevorzugt ist die Breite 29 um 10% gegenüber des Außendurchmessers 30 reduziert.

Die Ausnehmung 22 weist den Einführbereich 27 und den Lagerbereich 28 auf, wobei der Einführbereich 27 eine Innenweite 290 aufweist und der Lagerbereich 28 einen Innendurchmesser 300, welcher auf den Außendurchmesser 30 des Zweiflachvorsprungs 19 angepasst ist, um die Lagerung bereitstellen zu können. Die Innenweite 290 des Einführbereichs 27 ist mindestens so groß wie die Innenweite 29 des Zweiflachvorsprungs 19, d.h. sie sind aneinander angepasst. Weiterhin ist die Innenweite 290 des Einführbereichs 27 kleiner als der Außendurchmesser 30 des Zweiflachvorsprungs 19, so dass diese aneinander angepasst sind. Dies ist erforderlich, um nach einer Drehung des Zweiflachvorsprungs 19 gegenüber der Ausnehmung 22 in Drehrichtung 33 um die Schwenkachse 6 um einen Verdrehwinkel α ein Herausbewegen des Zweiflachvorsprungs 19 aus dem Lagerbereich 28 zu verhindern.

Nach der Drehung des Zweiflachvorsprungs 19 um einen Verdrehwinkel α ist der Zweiflachvorsprung 19 in dem Lagerbereich 28 aufgenommen, wie dies in der Figur 12 in einer schematisierten Draufsicht als Prinzipdarstellung dargestellt ist. Dabei genügt bereits ein Verdrehwinkel α von bereits 5°, um ein translatorisches Herausbewegen des Zweiflachvorsprungs 19 aus dem Lagerbereich 28 zu verhindern. Mit anderen Worten ist bereits ab ein Verdrehwinkel α von 5° der Zweiflachvorsprung 19 sicher in dem Lagerbereich 28 aufgenommen und translatorisch unverschiebbar in diesem gehalten.

Die erfindungsgemäßen Schwenklager 14, 15 sind auf einfache Weise mit wenigen Arbeitsgängen aus dem Material von Stelleinheit 2 bzw. Halteeinheit 5 herstellbar und gewährleisten bei kostengünstigem Aufbau eine universelle Einsetzbarkeit. Zudem wird die Spielreduktion der Schwenklager 14, 15 durch konische Ausgestaltungen 21 der Zweiflachvorsprünge 19, 20 und der Ausnehmungen 22, 23 gewährleistet. Ein weiterer Vorteil besteht in der einfachen Montage beim Zusammenbau von Stelleinheit 2 und Halteeinheit 5.

### BEZUGSZEICHENLISTE

- 1: Lenksäule
- 2: Stelleinheit
- 3: Mantelrohr
- 4: Lenkspindel
- 5: Halteeinheit
- 6: Schwenkachse
- 7: Klemmbacken
- 8: Klemmbacken
- 9: Klemmvorichtung
- 10: Betätigungshebel
- 11: Klemmbolzen
- 12: Schlitz
- 13: Schlitz
- 14: Schwenklager
- 15: Schwenklager
- 16: Innenseiten
- 17: Seitenteil
- 18: Seitenteil
- 19: Zweiflachvorsprung
- 20: Zweiflachvorsprung
- 21: konische Ausgestaltung
- 22: Ausnehmung
- 23: Ausnehmung
- 24: Außenseite
- 25: Wange
- 26: Wange
- 27: Einführbereich
- 28: Lagerbereich
- 29: Breite
- 30: Außendurchmesser
- 31: Drehachse der Lenkspindel
- 32: horizontaler Abstand
- 33: Drehrichtung
- 34: Schwenkbolzen
- 35: Klemmschlitz
- 191: Sekante
- 199: Basiskreis
- 198: Kreissegment
- 290: Innenweite des Einführbereichs
- 300: Innendurchmesser des Lagerbereichs

## Patentansprüche

1. Höhenverstellbare Lenksäule für ein Kraftfahrzeug, umfassend eine Stelleinheit (2), in der eine Lenkspindel (4) drehbar gelagert ist, wobei die Stelleinheit (2) an einer mit dem Fahrzeugchassis fest verbindbaren Halteeinheit (5) mittels zweier auf einer Schwenkachse (6) im horizontalem Abstand (32) zueinander angeordneter Schwenklager (14, 15) schwenkbar gelagert ist, wobei die Schwenklager (14, 15) jeweils aus einem axial vorstehenden Zweiflachvorsprung (19, 20) und einer mit dem Zweiflachvorsprung (19, 20) in Eingriff stehenden Ausnehmung (22, 23) bestehen, die jeweils einen Einführbereich (27) zum Einführen des Zweiflachvorsprungs (19, 20) in radialer Richtung zur Schwenkachse (6) aufweisen, wobei der Einführbereich (27) eine Innenweite aufweist, die angepasst an eine Breite (29) des Zweiflachvorsprungs (19, 20) ausgebildet ist und wobei der Einführbereich (27) in jeweils einen teilkreisförmigen Lagerbereich (28) übergeht, dessen Innendurchmesser (300) an den Außendurchmesser (30) des Zweiflachvorsprungs (19, 20) angepasst ist, sodass dieser nach einer Drehung (33) um die Schwenkachse (6) um mindestens 5° im Lagerbereich schwenkbar gelagert ist, **dadurch gekennzeichnet, dass** der Zweiflachvorsprung (19, 20) und/oder die Ausnehmung (22, 23) mittels Umformen in der Stelleinheit (2) und/oder der Halteeinheit (5) ausgebildet sind.

2. Lenksäule nach Anspruch 1, **dadurch gekennzeichnet, dass** der Zweiflachvorsprung (19, 20) bei jedem der beiden Schwenklager (14,15) an der Halteeinheit (5) und die Ausnehmung (22, 23) an der Stelleinheit (2) angeordnet ist.

3. Lenksäule nach Anspruch 1 oder 2, **dadurch gekennzeichnet, dass** die Zweiflachvorsprünge (19, 20) jeweils an Innenseiten (16) von nach unten ragenden Seitenteilen (17, 18) der Halteeinheit (5) und die Ausnehmungen (22, 23) auf den Außenseiten (24) der Stelleinheit (2) ausgebildet sind.

4. Lenksäule nach Anspruch 3, **dadurch gekennzeichnet, dass** der Einführbereich (27) der Ausnehmungen (22, 23) parallel zur Drehachse (31) der Lenkspindel (4) zu der dem Lenkrad abgewandten Seite hin ausgerichtet ist.

5. Lenksäule nach einem der vorhergehenden Ansprüche, **dadurch gekennzeichnet, dass** der Zweiflachvorsprung (19, 20) in seinem Außenumfangsbereich und/oder die Ausnehmung (22, 23) im Innenumfangsbereich eine konische Ausgestaltung (21) aufweisen oder mit einer Fase versehen sind.

6. Lenksäule nach einem der vorhergehenden Ansprüche, **dadurch gekennzeichnet, dass** ein Schwenkbolzen (34) vorgesehen ist, der sich durch die Zweiflachvorsprünge (19, 20) und die Ausnehmungen (22, 23) erstreckt.

## Claims

1. Height-adjustable steering column for a motor vehicle, comprising an actuating unit (2), in which a steering spindle (4) is rotatably mounted, wherein the actuating unit (2) is mounted pivotably on a retaining unit (5), which can be fixedly connected to the vehicle chassis, by means of two pivot bearings (14, 15) arranged at a horizontal distance (32) to one another on a pivot axis (6), wherein the pivot bearings (14, 15) are composed in each case of an axial protruding dihedron projection (19, 20) and a recess (22, 23) which is in engagement with the dihedron projection (19, 20) which comprise in each case an introduction region (27) for introduction of the dihedron projection (19, 20) in the radial direction with respect to the pivot axis (6), wherein the introduction region (27) comprises an inner span which is formed adapted to a width (29) of the dihedron projection (19, 20) and wherein the introduction region (27) forms a transition in each case into a partially circular bearing region (28), the inner diameter (300) of which is adapted to the outer diameter (30) of the dihedron projection (19, 20) so that it is mounted pivotably in the bearing region after a rotation (33) about the pivot axis (6) by at least 5°, **characterized in that** the dihedron projection (19, 20) and/or the recess (22, 23) are formed by reshaping in the actuating unit (2) and/or the retaining unit (5).

2. Steering column according to Claim 1, **characterized in that** the dihedron projection (19, 20) is arranged in the case of each of the two pivot bearings (14, 15) on the retaining unit (5) and the recess (22, 23) is arranged on the actuating unit (2) .

3. Steering column according to Claim 1 or 2, **characterized in that** the dihedron projections (19, 20) are formed respectively on inner sides (16) by downwardly protruding side parts (17, 18) of the retaining unit (5) and the recesses (22, 23) are formed on the outer sides (24) of the actuating unit (2).

4. Steering column according to Claim 3, **characterized in that** the introduction region (27) of the recesses (22, 23) is oriented parallel to the axis of rotation (31) of the steering spindle (4) towards the side facing away from the steering wheel.

5. Steering column according to any one of the preceding claims, **characterized in that** the dihedron projection (19, 20) in its outer circumferential region and/or the recess (22, 23) in the inner circumferential region comprise a conical configuration (21) or are provided with a chamfer.

6. Steering column according to any one of the preceding claims, **characterized in that** a pivot pin (34) is provided which extends through the dihedron projections (19, 20) and the recesses (22, 23).

## Revendications

1. Colonne de direction réglable en hauteur destinée à un véhicule automobile, la colonne de direction comprenant une unité de réglage (2), dans laquelle un arbre de direction (4) est monté à rotation, l'unité de réglage (2) étant montée de manière pivotante sur une unité de retenue (5) qui peut être reliée de manière fixe au châssis du véhicule au moyen de deux paliers de pivotement (14, 15) disposés à une distance horizontale (32) l'un de l'autre sur un axe de pivotement (6), les paliers de pivotement (14, 15) étant formés chacun d'une saillie à deux méplats (19, 20) qui se projettent axialement et d'un évidement (22, 23) qui s'engage avec la saillie à deux méplats (19, 20), chacun des évidements comportant une région d'insertion (27) destinée à l'insertion de la saillie à deux méplats (19, 20) dans la direction radiale par rapport à l'axe de pivotement (6), la région d'insertion (27) ayant une largeur intérieure qui est adaptée à la largeur (29) de la saillie à deux méplats (19, 20) et la région d'insertion (27) se transformant en une région de palier partiellement circulaire (28) dont le diamètre intérieur (300) est adapté au diamètre extérieur (30) de la saillie à deux méplats (19, 20) de sorte que celle-ci est logée dans la région de palier de manière à pouvoir pivoter d'au moins 5° sur l'axe de pivotement (6) après une rotation (33), **caractérisée en ce que** la saillie à deux méplats (19, 20) et/ou l'évidement (22, 23) sont formés dans l'unité de réglage (2) et/ou l'unité de retenue (5) par un processus de formage.

2. Colonne de direction selon la revendication 1, **caractérisée en ce que** la saillie à deux méplats (19, 20) est disposée dans chacun des deux paliers de pivotement (14, 15) au niveau de l'unité de retenue (5) et l'évidement (22, 23) est ménagé au niveau de l'unité de réglage (2).

3. Colonne de direction selon la revendication 1 ou 2, **caractérisée en ce que** les saillies à deux méplats (19, 20) sont respectivement formées sur des côtés intérieurs (16) par des parties latérales (17, 18), saillant vers le bas, de l'unité de retenue (5) et les évidements (22, 23) sont ménagés sur les côtés extérieurs (24) de l'unité de réglage (2).

4. Colonne de direction selon la revendication 3, **caractérisée en ce que** la région d'insertion (27) des évidements (22, 23) est orientée parallèlement à l'axe de rotation (31) de l'arbre de direction (4) en direction du côté opposé au volant.

5. Colonne de direction selon l'une des revendications précédentes, **caractérisée en ce que** la saillie à deux méplats (19, 20), dans sa région périphérique extérieure, et/ou l'évidement (22, 23), dans la région périphérique intérieure, ont une forme conique (21) ou sont munis d'un chanfrein.

6. Colonne de direction selon l'une des revendications précédentes, **caractérisée en ce qu'**un axe de pivotement (34) est prévu qui s'étend à travers les saillies à deux méplats (19, 20) et les évidements (22, 23).
